# EUROPÄISCHE PATENTSCHRIFT

(11) **EP 0 559 011 B1**
(45) Veröffentlichungstag und Bekanntmachung des Hinweises auf die Patenterteilung: **07.06.1995**
(21) Anmeldenummer: 93102587.8
(22) Anmeldetag: 19.02.1993
(51) Int. Cl.: B01D 29/11, B01D 29/21, B01D 29/23

(54) **Ringfilterelement mit den Stirnseiten dicht abdeckendem platten- oder folienförmigen Dichtmaterial**
Ring filter element with the endwalls covered tightly by a sealing material in flat or film-like disposition
Elément filtrant annulaire ayant les extrémités couvertes d'un matériau d'étanchéité en forme plate ou de feuille

(30) Priorität: 02.03.1992 DE 4206519; 30.07.1992 DE 4225144; 19.12.1992 DE 4243218
(43) Veröffentlichungstag der Anmeldung: 08.09.1993
(73) Patentinhaber: KNECHT FILTERWERKE GMBH, D-70376 Stuttgart (DE)
(72) Erfinder: Gebert, Hans, W-7100 Heilbronn-Böckingen (DE); Gundert, Dietwart, W-7123 Sachsenheim (DE); Jensen, Hans, W-7312 Kirchheim/Teck (DE); Lang, Hans-Peter, W-7012 Fellbach (DE); Möhle, Rolf, W-7117 Scheppach (DE); Rüdel, Gerhard, W-7101 Untereisesheim (DE); Sonntag, Dietmar, W-7148 Remseck 2 (DE)
(74) Vertreter: Pfusch, Volker, Dipl.-Ing.

(56) Entgegenhaltungen:
- FR-A- 1 533 767
- FR-A- 2 268 551
- GB-A- 1 151 592

## Beschreibung

Die Erfindung betrifft ein Ringfilterelement aus einem ringförmig angeordneten Filtermaterial, das insbesondere ein zick-zack-förmig gefaltetes Filtermaterial sein kann.

Ein Ringfilterelement dieser Art, dessen Stirnseiten durch plattenförmiges mit dem Filtermaterial verbundenes Dichtmaterial dicht abgedeckt sind und bei dem das Dichtmaterial verformbar ist und radial innen als Radialdichtung überragt, ist aus GB-A-1.151.592 bekannt. Die von der Radialdichtung ausgehende Dichtwirkung wird dadurch erreicht, daß dieses Dichtmaterial relativ steif ist und mit einer hohen Rückstellkraft versehen ist. Dadurch wird die Radialdichtung beim Aufsetzen auf einen Stutzen des Gehäuses, in das das Ringfilterelement eingesetzt werden soll, ausschließlich radial verdichtet, ohne dabei axial auszuweichen. Die Ausbildung einer derart aufgebauten und wirkenden Radialdichtung ist mit einem relativ hohen Herstellungs- und Materialaufwand verbunden.

Gleiches gilt für ein ähnlich aufgebautes Ringfilterelement nach FR-A-1 533 767.

Darüberhinaus ist aus FR-A-2 268 551 ein Ringfilterelement bekannt, bei dem die an das Dichtmaterial an den Filterelementstirnseiten integrierte Radialdichtung eine Art Lippendichtung ist. Diese Lippendichtung legt sich beim Aufsetzen auf einen Stutzen dicht an dessen Außenumfang an, indem sie sich in axialer Richtung verbiegt. Die dichte feste Anlage an dem Stutzen wird durch eine von dem Material der Dichtlippe ausgehende Rückstellkraft erzielt. Damit eine solche Rückstellkraft gegeben ist, muß die Dichtlippe aus einem speziellen aufwendig herzustellenden Dichtmaterial bestehen.

Von dem vorstehend abgehandelten Stand der Technik ausgehend beschäftigt sich die Erfindung mit dem Problem, ein Ringfilterelement an seinen Stirnseiten einfacher und kostengünstiger als bisher mit einer in das Stirnkantendichtmaterial integrierten Radialdichtung zu versehen. Insbesondere das Material dieser Radialdichtung soll preisgünstig und mit geringem Aufwand verarbeitbar sein. Eine Lösung dieses Problems ist durch eine Ringfilterelement-Ausführung nach dem Anspruch 1 gegeben. Dabei kommt dem Merkmal c die entscheidende Bedeutung für die Erfindung zu.

Nach diesem Merkmal kann die Radialdichtung aus einem beliebigen ringförmig gestalteten Material bestehen, sofern dieses nur verform- und zusammenpressbar ist. Erreicht wird dies erfindungsgemäß dadurch, daß beim Aufsetzen des Ringfilterelementes auf einen Stutzen die Radialdichtung aus der Fläche der Stirnseiten des Filterelementes nach innen in einen Spalt umgebogen wird, dessen Radialausdehnung so gewählt ist, daß der umgebogene Bereich der Radialdichtung verpreßt und damit zu einer dichten Anlage radial innen und außen an den jeweiligen angrenzenden Teilen zur Anlage kommt.

Eine zweckmäßige Ausgestaltung zeigt der Anspruch 2 auf. Danach kann die Radialdichtung aus einem anderen Material sein als das die Stirnseiten des Ringfilterelementes abdichtende Dichtmaterial, das beispielsweise eine mehr oder weniger unverformbare Platte sein kann. Diese Ausführungsform ist für Anwendungsfälle gedacht, in denen auf der einen Seite eine kostengünstige Radialdichtung erzeugt werden soll, andererseits das Dichtmaterial der Stirnseiten des Filterelementes aber aus einem bestimmten anderen Material sein soll. Ein festes Dichtmaterial muß an einer Stirnkante eines Ringfilterelementes beispielsweise dann vorgesehen werden, wenn an diesem Dichtmaterial ein Ventil anliegt, das durch seine Anlage ein für eine erfindungsgemäße Radialdichtung günstiges weiches Dichtmaterial zerstören könnte.

Weitere zweckmäßge Ausgestaltung der Erfindung geben die Unteransprüche 2 - 10 wieder.

Nähere Erläuterungen dieser Ausgestaltungen lassen sich der Beschreibung der in der Zeichnung dargestellten Ausführungsbeispiele entnehmen.

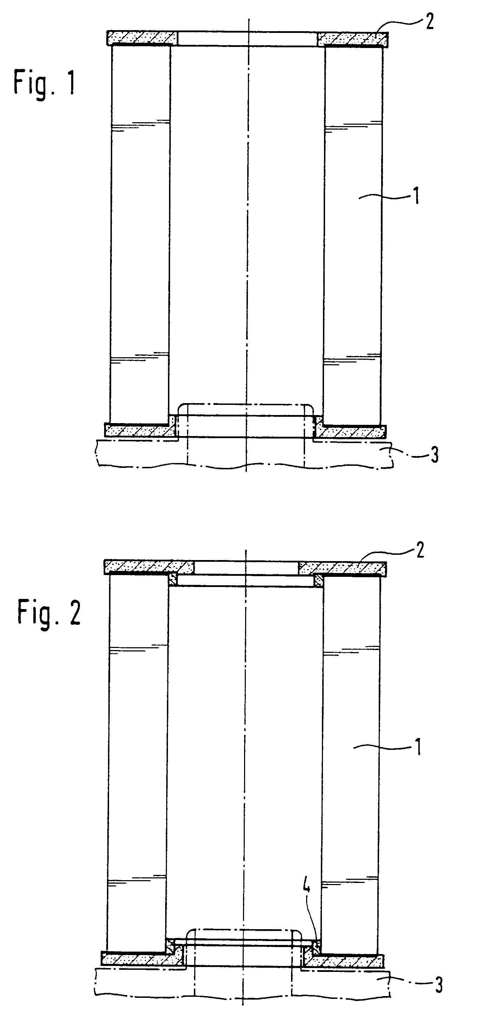

Es zeigen
- Fig. 1: einen Längsschnitt durch ein Ringfilterelement mit radial innen überstehendem Stirnkanten-Dichtmaterial,
- Fig. 2: eine alternative Ausführung des Ringfilterelementes in der Darstellungsweise nach Fig. 1 mit einer ringförmigen Abstützung für das radial stirnkantenseitig überstehende Dichtmaterial,
- Fig. 3: einen Längsschnitt durch ein Ringfilterelement mit stirnseitig radial innen überstehendem über ein Zwischenelement mit dem Filtermaterial verbundenem Dichtmaterial,
- Fig. 4: eine alternative Ausführung des Ringfilterelementes in der Darstellungsweise nach Fig. 3 mit einer ringförmigen Abstützung für das radial stirnkantenseitig überstehende Dichtmaterial,
- Fig. 5: ein Längsschnitt durch ein Ringfilterelement mit stirnseitig angebrachtem verformbarem zur radialen Dichtung in eine radiale Ausnehmung eines Stützringes einbringbarem Dichtmaterial.

Ein Ringfilterelement, bei dem das Filtermaterial 1 ein zick-zack-förmig gefaltetes Filterbahnmaterial aus Filterpapier ist, ist an seinen Stirnseiten mit einem schmelzbaren Vlies als Dichtmaterial 2, das selbst ebenfalls ein Filtermaterial ist, dicht abgedeckt.

Die dichte Abdeckung kommt dadurch zustande, daß das Vlies 2 durch Ultraschall- oder induktives Schweißen auf das Filterbahnmaterial 1 aufgeschmolzen ist.

Das aus Vlies bestehende Dichtmaterial 2 ragt radial innen in die von dem Filterbahnmaterial 1 gebildete Ringöffnung ringförmig hinein.

Die Dichtung des Ringfilterelementes gegenüber einem in die Ringöffnung eingreifenden Gehäusestutzen 3 wird dadurch erreicht, daß sich das radial überstehende Dichtmaterial beim Einführen des Gehäusestutzens verformt und sich in diesem verformten Zustand dicht an den Gehäusestutzen 3 anlegt, wobei es sich gleichzeitig dichtend an dem Innenumfang des Filterbahnmaterials 1 abstützt.

Um eine definiertere Abstützung des verformten Dichtmaterials 2 am Innenumfang des Ringfilterelementes zu erreichen, ist es möglich, zusätzlich einen Abstützring 4 im Inneren des Ringfilterelementes in demjenigen Bereich vorzusehen, in dem das Dichtmaterial 2 von dem in das Ringfilterelement einzuführenden Gehäusestutzen 3 verformt wird.

Die Anbringung des Abstützringes 4 erfolgt besonders zweckmäßig dadurch, daß dieser Ring bei der Erzeugung der Schmelzverbindung zwischen Dichtmaterial 2 und Filterbahnmaterial 1 mit an das Filterbahnmaterial 1 oder das Dichtmaterial 2 angeschmolzen wird. Ist allein das Dichtmaterial 2 aus einem schmelzbaren Material, wird der Stützring 4 vorteilhafterweise mit diesem Dichtmaterial schmelzverbunden.

Während bei dem beschriebenen Ausführungsbeispiel das stirnseitige Dichtmaterial nach radial innen über das Filterbahnmaterial 1 hinausragt, kann ein solches radiales Hinausragen auch radial außen erfolgen. In diesem Fall ist dann auch der Abstützring 4 dort vorzusehen.

Möglich ist es selbstverständlich auch, daß das Dichtmaterial 2 stirnkantenseitig radial innen und außen das Filterbahnmaterial 1 überragt, um innen und außen in ein Filtergehäuse dicht eingesetzt zu werden.

In bezug auf eine gute und umweltfreundliche Entsorgbarkeit des beschriebenen Ringfilterelementes empfiehlt es sich, das Filter- und Dichtmaterial gleich oder zumindest gleichartig auszuwählen.

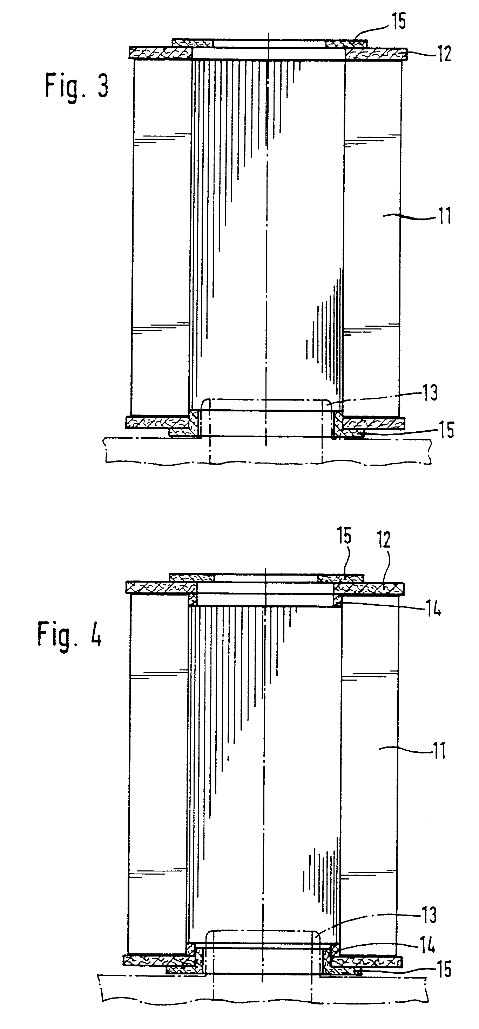

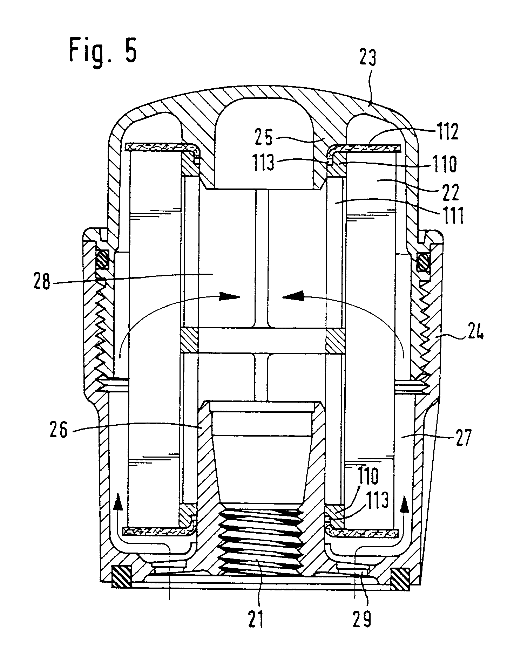

Bei der Ausführung nach der Fig. 3 und 4 ist ein Ringfilterelement, bei dem das Filtermaterial 11 ein zick-zack-förmig gefaltetes Filterbahnmaterial aus Filterpapier ist, an seinen Stirnseiten mit je einer Endscheibe aus Pappe als Dichtmaterial 12 dicht abgedeckt.

Auf dem Dichtmaterial 12 aus Pappe ist radial innen eine Ringscheibe 15 aus Vlies dicht aufgebracht, die radial innen in die von dem Filterbahnmaterial 11 gebildete Ringöffnung ringförmig hineinragt.

Die Dichtung des Ringfilterelementes gegenüber einem in die Ringöffnung eingreifenden Gehäusestutzen 13 wird dadurch erreicht, daß sich die radial überstehende Ringscheibe 15 beim Einführen des Gehäusestutzens 13 verformt und sich in diesem verformten Zustand dicht an den Gehäusestutzen 13 anlegt, wobei sie sich gleichzeitig dichtend an dem Innenumfang des Filterbahnmaterials 11 abstützt.

Um eine definiertere Abstützung der verformten Ringscheibe 15 am Innenumfang des Ringfilterelementes zu erreichen, ist es möglich, zusätzlich einen Abstützring 14 im Bereich des Ringfilterelementes in demjenigen Bereich vorzusehen, in dem die verformbare Ringscheibe 15 von dem in das Ringfilterelement einzuführenden Gehäusestutzen 13 verformt wird.

Die Verbindung der Ringscheibe 15 aus Vlies mit dem von der Papp-Endscheibe gebildeten Dichtmaterial 12 erfolgt durch Ultraschall oder Kleben.

Die Anbringung des Abstützringes 14 erfolgt besonders zweckmäßig dadurch, daß dieser Ring bei der Erzeugung einer Schmelzverbindung zwischen Dichtmaterial 12 und Ringscheibe 15 mit angeschmolzen wird.

Während bei dem beschriebenen Ausführungsbeispiel die mit dem stirnseitigen Dichtmaterial 13 verbundene Ringscheibe 15 aus verformbarem Vlies nach radial innen über das Filterbahnmaterial 11 hinausragt, kann ein solches radiales Hinausragen der Ringscheibe 15 auch radial außen erfolgen. In diesem Fall ist dann auch der Abstützring 14 dort vorgesehen.

Möglich ist es selbstverständlich auch, daß die jeweils mit dem Dichtmaterial 12 verbundene Ringscheibe 15 aus elastisch verformbarem Vlies stirnkantenseitig radial innen und außen das Filterbahnmaterial 11 überragt, um innen und außen in ein Filtergehäuse dicht eingesetzt zu werden.

In bezug auf eine gute und umweltfreundliche Entsorgung des beschriebenen Ringfilterelementes empfiehlt es sich, das Filter- und Dichtmaterial gleich oder zumindest gleichartig auszuwählen.

Bei dem Ausführungsbeispiel nach Fig. 5 ist in einem teilbaren Filtergehäuse, das über eine Gewindebohrung 21 auf einen nicht dagestellten Filterkopf aufschraubbar ist, ein Filterelement 22 austauschbar gelagert. Teilbar ist das Filtergehäuse dadurch, daß ein Gehäusedeckel 23 auf ein Unterteil 24 aufgeschraubt ist.

Von dem Gehäusedeckel 23 und dem Unterteil 24 ragen jeweils Stutzen 25 und 26 in das Gehäuseinnere zur Aufnahme des Filterelementes 22.

Zur Trennung eines in dem Filtergehäuse radial außen liegenden Rohraumes 27 gegenüber einem radial innerhalb des Filterelementes 22 liegenden Reinraum 28 ist das Filterelement 22 radial gegenüber den Stutzen 25 und 26 gedichtet.

Das zu filternde Medium tritt bei einer radialen Durchströmung des Filterelementes von außen nach innen über Öffnungen 29 in den Rohraum 27 des Filtergehäuses ein und verläßt dieses von dem Reinraum 28 aus über die Gewindebohrung 21. Diese Strömungsrichtung des Filtermediums ist in der Zeichnung durch entsprechende Pfeile angedeutet.

Die radiale Fixierung des Filterelementes 22 an den Stutzen 25 und 26 erfolgt über jeweils an den Stirnenden angebrachte Stützringe 110. Diese Stützringe 110 können über Streben 111 miteinander verbunden sein und so ein innerhalb des Filterelementes 22 liegendes Stützgerüst bilden.

Das Filtermaterial des Filterelementes 22 kann zick-zack-förmig gefaltetes Filterpapier sein.

Die Stirnkanten des Filterelementes 22 sind durch ein ringscheibenförmig ausgebildetes Vlies 112 gedichtet.

Sind die Stützringe 110 an den jeweiligen axialen Enden des Filterelementes 22 miteinander zu einem gemeinsamen Stützgerüst verbunden, so kann dieses Stützgerüst innerhalb des Filterelementes 22 allein durch Anlage der beiden an den axialen Enden liegenden Stützringe 110 an dem jeweils überstehenden Vlies gehalten sein.

Beim noch nicht in das Filtergehäuse eingesetztem Filterelement überragt das Vlies 112 die Stützringe 110 nach radial innen ringscheibenförmig. Um das über den Stützring 110 radial hinausragende Vliesmaterial bei in das Filtergehäuse eingebautem Zustand des Filterelementes 22 aufnehmen zu können, besitzen die Stützringe 110 jeweils radiale nach axial außen offene Ausnehmungen 113.

Der Innendurchmesser der Stützringe 110 ist in demjenigen axialen Bereich, in dem die Stützringe 110 radial nicht ausgenommen sind, so ausgelegt, daß ein Schiebesitz gegenüber den Stutzen 25 und 26 erzielbar ist. Dieser Schiebesitz dient dazu, das Filterelement 22 radial gegenüber den Stutzen 25 und 26 zu fixieren.

Die radiale Ausnehmung 113 ist bezüglich ihrer radialen Tiefe so ausgelegt, daß das Vlies 112 bei auf die Stutzen 25 und 26 aufgesetztem Filterelement 22 in solchem Maße verpreßt ist, daß eine einwandfreie Dichtfunktion gegeben ist.

Der Vorteil der erfindungsgemäßen Ausführung besteht insbesondere darin, daß die radiale Fixierung des Filterelementes 22 an den Stutzen 25 und 26 nicht über das Vlies-Material 112 erfolgen muß, sondern über den radial nicht zurückgenommenen Bereich der Stützringe 110 erhalten wird. Erst wenn eine solche Funktionstrennung innerhalb des Stützringes 110 gegeben ist, ist eine definierte über den gesamten Umfang gleiche Dichtwirkung durch den radial über den Stützring 110 hinausragenden Bereich des Vlieses 112 möglich.

## Patentansprüche

1. Ringfilterelement aus einem ringförmig angeordneten Filtermaterial, das insbesondere ein zick-zack-förmig gefaltetes Filtermaterial sein kann, mit den Merkmalen:
a) die Stirnseiten des Ringfilterelementes sind durch platten- oder folienförmiges Dichtmaterial (2, 112), das mit dem Filtermaterial verbunden ist, dicht abgedeckt,
b) an mindestens einer Stirnseite ist das Dichtmaterial (2, 112) verformbar und ragt radial innen und/oder außen zur Bildung einer Radialdichtung über,
c) der Innen- und/oder Außendurchmesser des Ringfilterelementes ist so bemessen, daß das überragende Dichtmaterial (2, 112) in einem um etwa 90 Winkelgrad umgebogenen Zustand zwischen dem Innen- oder Außenumfang des Ringfilterelementes und einem diesem gegenüberliegenden Teil (13, 25, 26) eines für die Aufnahme des Ringfilterelementes bestimmten Gehäuses durch jeweils innen und außen gleichzeitiges dichtes Anliegen radial verdichtbar ist.

2. Ringfilterelement aus einem ringförmig angeordneten Filtermaterial, das insbesondere ein zick-zack-förmig gefaltetes Filtermaterial sein kann, mit den Merkmalen:
a) die Stirnseiten des Ringfilterelementes sind durch platten- oder folienförmiges Dichtmaterial (12), das mit dem Filtermaterial verbunden ist, dicht abgedeckt,
b) auf das platten- oder folienförmige Dichtmaterial (12) ist an mindestens einer Stirnseite des Filterelementes eine das Filtermaterial radial innen und/oder außen ringförmig überragende Ringscheibe (15) aus verformbarem Material als Radialdichtung aufgebracht,
c) der Innen- und/oder Außendurchmesser des Ringfilterelementes ist so bemessen, daß der überragende Bereich der Ringscheibe (15) in einem um etwa 90 Winkelgrad umgebogenen Zustand zwischen dem Innen- und Außenumfang des Ringfilterelementes und einem diesem gegenüberliegenden Teil (13) eines für die Aufnahme des Ringfilterelementes bestimmten Gehäuses durch jeweils innen und außen gleichzeitiges dichtes Anliegen radial verdichtbar ist.

3. Ringfilterelement nach Anspruch 1 oder 2,
dadurch **gekennzeichnet,**
daß das Dichtmaterial (2, 112) bzw. die Ringscheibe (15) ein Vlies ist.

4. Ringfilterelement nach Anspruch 3,
dadurch **gekennzeichnet,**
daß das Vlies ein aufschmelzbares Vlies ist.

5. Ringfilterelement nach einem der Ansprüche 2 bis 4,
dadurch **gekennzeichnet**,
daß die Ringscheibe (15) aus aufschmelzbarem Material besteht und die Verbindung zwischen der Ringscheibe (15) und dem Dichtmaterial (12) eine durch die angrenzenden Materialen erzeugte Schmelzverbindung ist.

6. Ringfilterelement nach Anspruch 5
dadurch **gekennzeichnet,**
daß das Vlies der Ringscheibe (15) durch Aufschmelzen mit dem Dichtmaterial (12) verbunden ist.

7. Ringfilterelement nach einem der vorhergehenden Ansprüche,
dadurch **gekennzeichnet,**
daß das Filtermaterial an den Stirnseiten in demjenigen Bereich, in dem das Dichtmaterial (2, 112) bzw. die Ringscheibe (15) radial übersteht, mit einem axial das Filtermaterial nicht überragenden Stützring (4, 14, 110) versehen ist, über den das Dichtmaterial (2, 112) bzw. die Ringscheibe (15) radial jeweils ringförmig hinausragt.

8. Ringfilterelement nach Anspruch 7,
dadurch **gekennzeichnet,**
daß der Stützring (14) während der Erzeugung der Schmelzverbindung der Ringscheibe (15) mit dem Dichtmaterial (12) gleichzeitig mit an das Dichtmaterial (12) angeschmolzen ist.

9. Ringfilterelement nach einem der vorhergehenden Ansprüche,
dadurch **gekennzeichnet,**
daß ein zumindest an einer Stirnseite des Filterelementes (22) vorgesehener Stützring (110) an seinem jeweils dem Dichtmaterial (112) zugewandten Ende eine nach axial außen und radial innen bzw. außen offene Ausnehmung (113) zur Aufnahme des um diesen Stützring (110) umgebogenen radial überstehenden Dichtmaterials (112) in einer radialen Tiefe aufweist, die geringer ist als die Dicke des keinem Preßdruck ausgesetzten Dichtmaterials (112).

10. Ringfilterelement nach Anspruch 9,
dadurch **gekennzeichnet,**
daß an jedem axialen Ende ein Stützring (110) vorgesehen ist und daß diese beiden Stützringe (110) über Streben (111) zu einem gemeinsamen Teil vereint sind, das ausschließlich durch das die Stützringe (110) jeweils radial überragende Dichtmaterial gehalten ist.

## Claims

1. Ring filter element made of a filter material arranged in a ring shape, which in particular can be a zigzag-shaped folded filter material with the features:
a) the end faces of the ring filter element are tightly covered by sheet or film-shaped sealing material (2, 112) which is joined to the filter material,
b) at at least one end face the sealing material (2, 112) is malleable and projects radially inwards and/or outwards to form a radial seal,
c) the inner and/or outer diameter of the ring filter element is measured so that the projecting sealing material (2, 112) is radially sealable in a position bent at an angle of about 90 degrees between the inner or outer circumference of the ring filter element and a member (13, 25, 26) opposite thereto of a casing designed to receive the ring filter element by fitting tightly both inwards and outwards at the same time.

2. Ring filter element made of a filter material arranged in a ring, which in particular can be a zigzag-shaped folded filter material with the features:
a) the end faces of the ring filter element are tightly covered by sheet or film-shaped sealing material (12) which is joined to the filter material,
b) at least at one end face of the filter element a ring disc (15) of malleable material projecting over the filter material radially inwards and/or outwards in a ring is attached as a radial seal to the sheet or film-shaped sealing material (12).
c) the inner and/or outer diameter of the ring filter element is measured so that the projecting area of the ring disc (15) is radially sealable in position bent at an angle of about 90 degrees between the inner or outer circumference of the ring filter element and a member (13) opposite thereto of a casing designed to receive the ring filter element by fitting tightly both inwards and outwards at the same time.

3. Ring filter element according to claim 1 or 2,
**characterized in that**
the sealing material (2, 112) or ring disc (15) is a fleece.

4. Ring filter element according to claim 3,
**characterized in that**
the fleece is a meltable fleece.

5. Ring filter element according to one of claims 2 to 4,
**characterized in that**
the ring disc (15) consists of a meltable material and the connection between the ring disc (15) and the sealing material (12) is made by a melt connection produced by the neighbouring materials.

6. Ring filter element according to claim 5,
**characterized in that**
the fleece of the ring disc (15) is connected to the sealing material (12) by melting.

7. Ring filter element according to one of the preceding claims,
**characterized in that**
the filter material on the end faces in the area in which the sealing material (2, 112) or the ring disc (15) projects radially is provided with a support ring (4, 14, 110) not projecting axially over the filter material over which the sealing material (2, 112) or the ring disc (15) both project radially in a ring.

8. Ring filter element according to claim 7,
**characterized in that**
during the production of the melt connection of the ring disc (15) with the sealing material (12) at the same time the support ring (14) is melted onto the sealing material (12).

9. Ring filter element according to one of the preceding claims,
**characterized in that**
a support ring (110) provided at least at one end face of the filter element (22) at its end facing the sealing material (112) has a recess (113) open axially outwards and radially inwards or outwards for receiving the sealing material (112) which is bent around the support ring (110) and projects radially in a radial depth, which is smaller than the thickness of the sealing material (112) not subjected to compacting pressure.

10. Ring filter element according to claim 9,
**characterized in that**
a support ring (110) is provided at each axial end and that both these support rings (110) are joined by struts (111) to a common member which is held exclusively by the sealing material extending radially over the support rings (110).

## Revendications

1. Elément filtrant annulaire composé d'un matériau filtrant disposé en anneau, qui peut être un matériau filtrant plié en zigzag, notamment, caractérisé en ce que
a) les extrémités de l'élément filtrant annulaire sont couvertes hermétiquement par un matériau d'étanchéité en forme de plaque ou de feuille (2, 112), assemblé avec le matériau filtrant,
b) le matériau d'étanchéité (2, 112) est déformable sur une extrémité, au moins, et dépasse dans le sens radial interne et/ou externe pour former un joint radial,
c) le diamètre interne et/ou externe de l'élément filtrant annulaire a un dimensionnement tel que le matériau d'étanchéité en saillie (2, 112), dans un état de repli de l'ordre de 90°, est compressible dans le sens radial, par un appui hermétique et simultané interne et externe, entre le pourtour interne ou externe de l'élément filtrant annulaire et une partie (13, 25, 26), en vis-à-vis de ce pourtour, d'un boîtier destiné à recevoir l'élément filtrant annulaire.

2. Elément filtrant annulaire composé d'un matériau filtrant disposé en anneau, qui peut être un matériau filtrant plié en zigzag, notamment, caractérisé en ce que
a) les extrémités de l'élément filtrant annulaire sont couvertes hermétiquement par un matériau d'étanchéité en forme de plaque ou de feuille (12), assemblé avec le matériau filtrant,
b) sur le matériau d'étanchéité en forme de plaque ou de feuille (12), une rondelle annulaire (15), composée d'un matériau déformable et dépassant en anneau du matériau filtrant, dans le sens radial interne et/ou externe, est appliquée sous forme de joint radial sur une extrémité au moins de l'élément filtrant,
c) le diamètre interne et/ou externe de l'élément filtrant annulaire a un dimensionnement tel que la zone en saillie de la rondelle annulaire (15), dans un état de repli de l'ordre de 90°, est compressible dans le sens radial, par un appui hermétique et simultané interne et externe, entre le pourtour interne et externe de l'élément filtrant annulaire et une partie (13), en vis-à-vis de ce pourtour, d'un boîtier destiné à recevoir l'élément filtrant annulaire.

3. Elément filtrant annulaire suivant l'une des revendications 1 ou 2, caractérisé en ce que le matériau d'étanchéité (2, 112) et/ou la rondelle annulaire (15) est un voile.

4. Elément filtrant annulaire suivant la revendication 3, caractérisé en ce que le voile est un voile fusible.

5. Elément filtrant annulaire suivant l'une quelconque des revendications 2 à 4, caractérisé en ce que la rondelle annulaire (15) se compose d'un matériau fusible, l'assemblage entre la rondelle annulaire (15) et le matériau d'étanchéité (12) étant un assemblage par fusion produit par les matériaux limitrophes.

6. Elément filtrant annulaire suivant la revendication 5, caractérisé en ce que le voile de la rondelle annulaire (15) est assemblé par fusion avec le matériau d'étanchéité (12).

7. Elément filtrant annulaire suivant l'une quelconque des revendications précédentes, caractérisé en ce que le matériau filtrant est muni sur les extrémités, dans la zone où le matériau d'étanchéité (2, 112) et/ou la rondelle annulaire (15) sont en saillie radiale, d'une bague d'appui (4, 14, 110) ne dépassant pas du matériau filtrant dans le sens axial, et dont dépassent en forme d'anneau, dans le sens radial, le matériau d'étanchéité (2, 112) et/ou la rondelle annulaire (15).

8. Elément filtrant annulaire suivant la revendication 7, caractérisé en ce que la bague d'appui (14) est fondue simultanément avec le matériau d'étanchéité (12) pendant l'assemblage par fusion entre la rondelle annulaire (15) et le matériau d'étanchéité (12).

9. Elément filtrant annulaire suivant l'une quelconque des revendications précédentes, caractérisé en ce qu'une bague d'appui (110), prévue sur une extrémité au moins de l'élément filtrant (22), présente, sur son extrémité tournée vers le matériau d'étanchéité (112), un évidement (113) ouvert dans le sens axial externe et dans le sens radial interne et/ou externe, pour recevoir le matériau d'étanchéité (112) en saillie radiale, replié autour de cette bague d'appui (110), la profondeur radiale de cet évidement étant inférieure à l'épaisseur du matériau d'étanchéité (112), non soumis à une pression de serrage.

10. Elément filtrant annulaire suivant la revendication 9, caractérisé en ce qu'une bague d'appui (110) est prévue sur chaque extrémité axiale, et en ce que ces deux bagues d'appui (110) sont réunies par des entretoises (111) en une partie commune, exclusivement maintenue par le matériau d'étanchéité dépassant dans le sens radial des bagues d'appui (110).
